# EUROPÄISCHE PATENTSCHRIFT

(11) **EP 1 880 924 B1**
(45) Veröffentlichungstag und Bekanntmachung des Hinweises auf die Patenterteilung: **21.04.2010**
(21) Anmeldenummer: 07013090.1
(22) Anmeldetag: 04.07.2007
(51) Int. Cl.: B62D 21/02, B62D 21/15, B62D 25/20

(54) **Träger als Längs- bzw. Querträger in einem Kraftfahrzeug**
Beam in the form of a sill or of a transverse member in a motor vehicle
Poutre en tant que traverse ou longeron dans un véhicule automobile

(30) Priorität: 04.07.2006 DE 102006031190
(43) Veröffentlichungstag der Anmeldung: 23.01.2008
(60) Teilanmeldung: 08017450.1
(73) Patentinhaber: Linde + Wiemann GmbH KG, 35863 Dilllenburg (DE)
(72) Erfinder: Gutermuth, Andreas, 35719 Angelburg (DE)
(74) Vertreter: Müller, Eckhard

(56) Entgegenhaltungen:
- EP-A- 1 840 003
- WO-A-02/11261
- WO-A-2005/108193
- DE-A1- 19 524 361
- DE-A1-102004 033 971
- DE-A1-102006 006 680
- DE-C1- 10 065 219
- FR-A- 2 799 717

## Beschreibung

Die Erfindung betrifft einen Träger als Längs- bzw. Querträger in einem Kraftfahrzeug, insbesondere in Form eines Schwellers, mit wenigstens zwei Bauteilen, welche unter Bildung eines Hohlraums miteinander verbunden sind, wobei wenigstens eines der Bauteile in den Hohlraum ragende Aussteifungselemente aufweist.

### Technologischer Hintergrund

Träger in Art eines Längs- bzw. Querträgers sind heute üblicherweise Teil der selbsttragenden Karosserie eines Automobils. Die Träger können beispielsweise den so genannten Schweller bilden. Dieser befindet sich unterhalb des Türeinstiegs, längs auf beiden Seiten des Fahrzeuges, zwischen den Radkästen vorn und hinten. Die Träger sollen zum einen eine relativ hohe Steifigkeit aufweisen, um plastische Verformungen, gerade an den Fugen zu den Anbauteilen der Karosserie gering zu halten und Knarrgeräusche im Fahrbetrieb zu vermeiden. Auch können aufgrund der relativ hohen Steifigkeit im Crashfall auftretenden Kräfte über den Träger gezielt in die Knautschzone der Karosserie weitergeleitet werden. Gleichzeitig soll der Träger selbst die im Crashfall auftretende Aufprallenergie in einem gewissen Umfang durch elastische Verformung selbst absorbieren können. Weiterhin soll der Träger natürlich gewichtsmäßig möglichst leicht ausgeführt sein. Um diesen Anforderungen zu genügen, werden die Träger heute üblicherweise aus mehrschaligen Bauteilen gebildet, welche unter Bildung wenigstens eines Hohlraums miteinander verbunden sind. Diese Träger sind heute in zunehmendem Maße komplex gestaltet, um auch den Anforderungen im Crashfall gerecht zu werden.

### Stand der Technik

Ein Träger der hier angesprochenen Art ist aus der FR 2 799 717 A bekannt. Er dient als Längs- oder Querträger in einem Kraftfahrzeug. Der bekannte Träger weist zwei Profilteile auf, welche unter Bildung eines Hohlraumes miteinander verbunden sind. Der bekannte Träger weist ferner Aussteifungselemente auf, welche quer zur Längsrichtung der Profilteile angeordnet sind und zum Abstützen gegen die Profilteile ausgebildet sind.

Träger für den Einsatz in Kraftfahrzeugen, welche Aussteifungselemente aufweisen, sind auch aus der WO 02/11261 A, der DE 100 65 219 C1 und aus der gattungsgemäßen WO 2005/108193 A bekannt.

Weitere Träger sind aus der DE 10 2004 044 054 A1, der DE 10 2004 044 037 A1 oder der DE 10 2004 033 971 A1 bereits bekannt. Jeder Träger ist entlang seiner Längserstreckung mit dem Bodenblech der Karosserie, dem so genannten Hauptboden, fest verbunden. Dazu sind an einem der den Träger bildenden Schale wenigstens zwei Verbindungsbereiche für die Anbindung des Hauptbodens vorgesehen. Jene Verbindungsbereiche sind dabei an dem Materialabschnitt der Trägerschale angeordnet, welcher zugleich mit der anderen Trägerschale den wenigstens einen Hohlraum des Trägers bildet. Es hat sich herausgestellt, dass die Anbindung des Hauptbodens der Karosserie an den dort am Träger vorgesehenen Verbindungsbereichen im Crashfall zu einer so starken plastischen Verformung des Trägers führen kann, dass es in diesem Bereich zu einem ungewollten Bauteilversagen kommen kann.

Um im Crashfall eine zu starke plastische Verformung des Trägers zu vermeiden, sind auch aus der DE 10 2004 044 054 A1 Aussteifungselemente bekannt, welche an einem der schalenförmigen Konstruktionselemente des Trägers vorgesehen sind und insbesondere zur Aussteifung in Längserstreckung des Trägers dienen.

Bei den bekannten Trägern lässt sich nur mit relativ hohem konstruktiven und herstellungstechnischen Aufwand eine Anbindung an den Hauptboden der Karosserie realisieren, wenn der Hauptboden in Richtung der Längserstreckung des Trägers keine gleichbleibende Form aufweist. Denn hierzu muss die mit den Verbindungsbereichen für die Karosserie versehene Trägerschale eine entsprechend angepasste Form erhalten, was in der Praxis häufig nur mit relativ hohem herstellungstechnischen Aufwand realisierbar ist. Konstruktionselement des Trägers in entsprechender Weise zu gestalten, damit die Verbindungsbereiche an eben diese Form des Karosserieteiles angepasst ist.

Aus der US 5 829 824 A ist es bekannt, zum Verstärken des Bodenbleches eines Fahrzeuges jeweils von unten und von oben ein schalenförmiges Trägerteil an dem Bodenblech mittels Schweißen zu fixieren. Das jeweilige Trägerteil ist dabei mit dem Bodenblech in der Weise verbunden, dass jeweils ein Hohlraum gebildet ist.

Aus der DE 196 13 219 A1 ist ein Hohlprofilträger für ein Kraftfahrzeug bekannt, welches aus zwei trogförmigen Profilteilen zusammengesetzt ist. Zwischen den Profilteilen befindet sich ein Verstärkungsteil, welches in Längsrichtung des Hohlprofilträgers verläuft. An dem Verstärkungsteil sind Sicken ausgeformt.

### Aufgabenstellung

Der Erfindung liegt die Aufgabe zugrunde, einen Träger mit den eingangs genannten Merkmalen vorzuschlagen, bei welchem mit wenig herstellungstechnischem Aufwand die Stützwirkung der Aussteifungselemente verbessert ist.

### Erfindung und vorteilhafte Wirkungen

Zur Lösung der Aufgabe wird ein Träger vorgeschlagen, welcher die in Anspruch 1 genannten Merkmale aufweist. Der Träger enthält wenigstens zwei Bauteile, welche unter Bildung eines Hohlraums miteinander verbunden sind, wobei wenigstens eines der Bauteile Aussteifungselemente aufweist. Der Träger zeichnet sich unter anderem dadurch aus, dass die Aussteifungselemente des wenigstens einen Bauteils jeweils eine Fläche aufweisen, welche zum Abstützen gegen das andere Bauteil ausgebildet sind.

Durch diese Maßnahme kommt den Aussteifungselementen eine Doppelfunktion zu. Zum einen versteifen sie das Bauteil in seiner Längserstreckung, an dem sie angeordnet sind. Darüber hinaus kann durch sie eine ungewollte plastische Verformung der Bauteile vermieden werden, da sie im Crashfall als Stütze für das andere Bauteil dienen. Insofern ist es mittels der Aussteifungselemente möglich, die beim Crashfall auftretende Aufprallenergie gezielt über den Träger, beispielsweise in eine Knautschzone der Karosserie, weiterzuleiten.

Erfindungsgemäß ist es vorgesehen, dass die Stützfläche der Aussteifungselemente durch ein abgewinkeltes Ende gebildet ist. Hierdurch ist mit wenig herstellungstechnischem Aufwand eine besonders gute Abstützwirkung durch die Aussteifungselemente gegenüber dem anderen Bauteil ermöglicht.

Zur Lösung der Aufgabe wird ferner ein Träger mit den Merkmalen des Anspruches 24 vorgeschlagen.

Nach einer Ausgestaltung der Erfindung ist es vorgesehen, dass sich die Aussteifungselemente mit ihrer Stützfläche gegen das andere Bauteil abstützen. Hierdurch kann eine etwaige Verformung des anderen Bauteils noch weiter verringert werden, da die Bauteile des Trägers von Hause aus bereits mittels der Aussteifungselemente sich gegeneinander abstützen.

Es ist von Vorteil, dass die Aussteifungselemente des wenigstens einen Bauteils an dem anderen Bauteil fixiert sind. Vorzugsweise sollte diese Fixierung mittels thermischem Fügeverfahren oder Kleben realisiert sein. Hierdurch ist eine besonders biegesteife Verbundstruktur durch die beiden Bauteile hergestellt.

Nach einer weiteren Ausgestaltung der Erfindung ist es vorgesehen, dass die Aussteifungselemente aus dem wenigstens einen Bauteil geformt sind. Die Aussteifungselemente müssen hierdurch nicht separat hergestellt und aufwendig an dem Bauteil befestigt werden.

Nach einer vorteilhaften Ausgestaltung der Erfindung ist es ferner vorgesehen, dass die Aussteifungselemente durch Umformen, beispielsweise durch Gesenkformen, Ein-/Durchdrücken, Tiefziehen, aus dem wenigstens einen Bauteil gebildet sind. Auf diese Weise ist ein besonders einfaches Herstellen auch einer Vielzahl von Aussteifungselementen in das Bauteil problemlos möglich. Auch können dadurch eine Vielzahl von Bauteilen ohne großen Aufwand mit den Aussteifungselementen versehen werden.

Nach einer alternativen Ausgestaltung der Erfindung ist es vorgesehen, dass die Aussteifungselemente durch Trennen und anschließendes Umformen aus dem wenigstens einen Bauteil geformt sind. Auch auf diese Weise ist eine einfache Herstellung der Herstellungselemente aus dem Bauteil möglich.

Eine besonders einfache Herstellung ist dann gegeben, wenn die Aussteifungselemente durch Stanzen und anschließendes Biegen des ausgestanzten Abschnitts gebildet sind. Durch das Biegen kann der ausgestanzte Abschnitt individuell ausgerichtet werden, sodass eine Anpassung an verschiedene Einbausituationen des Bauteils problemlos möglich ist.

Nach einer weiteren Ausgestaltung der Erfindung ist es vorgesehen, dass die Aussteifungselemente im Wesentlichen quer zur Längsrichtung des wenigstens einen Bauteils liegen. Damit ist eine besonders gute Versteifungswirkung durch die Aussteifungselemente in Querrichtung erreicht, so dass die beispielsweise bei einem Seitenaufprall einwirkenden Kräfte direkt an innen liegende Querträger übertragen werden können. Bevorzugt sollten dazu die Aussteifungselemente in den Hohlraum des Hohlraums hineinragen.

Nach einer anderen Ausgestaltung der Erfindung ist es vorgesehen, dass die Aussteifungselemente an den wenigstens zwei Bauteilen vorgesehen sind. Dadurch kann eine noch bessere Versteifungswirkung quer zur Längsrichtung des Trägers erreicht werden.

In diese Richtung zielt auch die Maßnahme, dass die Aussteifungselemente derart in einem Abstand zueinander an den Bauteilen angeordnet sind, dass sich die Aussteifungselemente der Bauteile abwechseln.

Nach einer Ausgestaltung der Erfindung ist es vorgesehen, die wenigstens zwei Bauteile über wenigstens zwei Verbindungsbereiche an der Karosserie des Fahrzeuges fixierbar sind und jedes der Bauteile wenigstens einen der Verbindungsbereiche bildet, wobei wenigstens eines der Bauteile mit seinem einen Ende einen der Verbindungsbereiche bildet und sich mit seinem anderen Ende gegen das andere Bauteil außerhalb dessen Verbindungsbereich abstützt.

Es hat sich gezeigt, dass durch diese Maßnahme der Träger gerade in seinen Verbindungsbereichen für die Karosserie eine höhere Steifigkeit gegenüber den bisher bekannten Trägern aufweist. Damit können im Crashfall auftretende etwaige plastische Verformungen am Träger gezielt soweit verringert werden, dass ein Bruch des Trägers im Bereich seiner Verbindungsbereiche mit der Karosserie vermieden ist.

Indem das wenigstens eine Bauteil des Trägers an seinem einen Ende einen der Verbindungsbereiche aufweist und sich sein anderes Ende gegen das andere Bauteil außerhalb dessen Verbindungsbereich abstützt, ist darüber hinaus bei dem Träger die Möglichkeit gegeben, dass die Verbindungsbereiche durch Ausrichten der Bauteile bei deren Zusammenfügen noch in ihrer Lage zueinander festgelegt werden können. Der Träger kann damit problemlos auch an einer Karosserie des Fahrzeuges, insbesondere am Hauptboden der freitragenden Karosserie, fixiert werden, dessen Form entlang der Verbindungsbereiche des Trägers nicht gleichbleibend ist. Mit anderen Worten kann mittels des Trägers eine Ausrichtung seiner Verbindungsbereiche zueinander noch beim Zusammenfügen der Bauteile während der Montage vorgenommen werden.

Nach einer vorteilhaften Ausgestaltung der Erfindung ist es vorgesehen, dass jedes der Bauteile mit seinem einen Ende einen der Verbindungsbereiche bildet und sich mit seinem anderen Ende gegen das jeweils andere der Bauteile außerhalb dessen Verbindungsbereich abstützt. Die auf diese Weise miteinander verbundenen Bauteile bilden einen Träger mit besonders hoher Steifigkeit, insbesondere an den Verbindungsbereichen. Da den Enden der Bauteile die gleichen Funktionen zukommen, ist eine besonders einfache Herstellung der Bauteile möglich, da diese im Grunde gleichartig aufgebaut werden können.

Nach einer weiteren Ausgestaltung der Erfindung ist es vorgesehen, dass die wenigstens zwei Bauteile einen im Wesentlichen gleichbleibenden Querschnitt über ihre Länge aufweisen. Hierdurch kommt den Bauteilen eine besonders einfach zu realisierende Kontur zu, welche insofern kostengünstig hergestellt werden kann.

Eine weitere Vereinfachung der Herstellung und somit eine weitergehende Kostenreduzierung ergibt sich dann, wenn die Bauteile mit im Wesentlichen gleichbleibendem Querschnitt über ihre Länge gleiche Bauteile sind. Dadurch kann bei der Herstellung der Träger auf lediglich eine Art von Bauteil zurückgegriffen werden, wodurch die Herstellung des Trägers insgesamt vereinfacht ist und Kosten beispielsweise für die Herstellung anderer Bauteile eingespart werden können.

Nach einer weiteren Ausgestaltung der Erfindung ist es vorgesehen, dass jedes der Bauteile wenigstens einen der Verbindungsbereiche bildet und wenigstens eines der Bauteile mit seinem wenigstens einen Verbindungsbereich zum Fixieren an einer sich in Längserstreckung des Trägers ändernden Kontur der Karosserie ausgebildet ist.

Es hat sich gezeigt, dass auch durch diese Maßnahme ein Träger mit hoher Formsteifigkeit, insbesondere an seinen Verbindungsbereichen zur Karosserie realisiert ist. Darüber hinaus lässt sich der Träger flexibel und mit wenig Aufwand auf eine sich ändernde Kontur der Karosserie einstellen. Dies ist insbesondere bei solchen Trägern von Vorteil, welche alleine durch ein Ausrichten der Verbindungsbereiche zueinander beim Zusammenfügen der Bauteile während der Montage nicht mehr vorgenommen werden kann. Insofern kann der Träger problemlos auch an Karosserien mit besonders starker Konturänderung an Verbindungsbereichen des Trägers eingesetzt werden.

Nach einer Ausgestaltung dieses Erfindungsgedankens ist es vorgesehen, dass das andere Bauteil einen im Wesentlichen gleichbleibenden Querschnitt über seine Länge aufweist. Hierdurch kann besonders kostengünstig ein Träger realisiert werden, welcher sich zum Fixieren an einer in Längserstreckung des Trägers ändernden Kontur der Karosserie geeignet ist. Denn zumindest das andere Bauteil kann kostengünstig als Bauteil mit über die Länge gleichbleibendem Querschnitt hergestellt werden.

Bevorzugt sollte dabei das Bauteil mit dem im Wesentlichen gleichbleibenden Querschnitt ein Rollformteil sein. Aufgrund des Rollformverfahrens lassen sich nämlich Bauteile mit hoher Maßhaltigkeit herstellen. Diese Maßhaltigkeit kann beim Rollformen auch für verwendetes Bauteilmaterial mit besonders hoher Festigkeit erreicht werden, obwohl bei diesem Material von Hause aus eine relativ hohe Rückverformung auftritt.

Eine weitere Ausgestaltung der Erfindung sieht vor, dass die Verbindungsbereiche an vom Hohlraum abstehenden Abschnitten des Trägers angeordnet sind. Hierdurch ist die Anbindung an der Karosserie in besonders einfacher Weise möglich, da durch die nach außen stehenden Abschnitte von außen gut zugängliche Bereiche, beispielsweise für einen Schweißroboter, in Art von Anschlussflanschen gebildet sind. Darüber hinaus hat es sich gezeigt, dass durch die Anordnung der Verbindungsbereiche an nach außen stehenden Abschnitten im Crashfall ein frühzeitiges Bauteilversagen an den Verbindungsbereichen vermieden ist.

In einer Ausgestaltung der Erfindung ist es vorgesehen, dass sich die Abschnitte in Längsrichtung des Hohlraums erstrecken. Dadurch ist zum einen eine besonders feste und haltbare Verbindung zwischen dem Träger und der Karosserie realisierbar und zum anderen ist ein weiter verbesserter Aufprallschutz aufgrund der relativ großen Verbindungsfläche zwischen dem jeweiligen Verbindungsbereich und dem Karosseriebauteil erreicht. Dies ist besonders dann der Fall, wenn sich die Abschnitte über die gesamte Länge des Hohlraums erstrecken und die Karosserie an diesen Abschnitten weitgehend flächig anliegt.

Nach einer weiteren Ausgestaltung der Erfindung sind drei Bauteile vorgesehen, welche unter Bildung eines zwei Kammern einschließenden Hohlraums zusammengefügt sind. Es ist dadurch ein Hohlraum mit hoher Steifigkeit und verbesserter Fähigkeit zur Aufnahme von Aufprallenergie realisiert.

Es bietet sich an, dass die Bauteile mittels Rollformen und/oder durch Strangpressen hergestellt sind. Dadurch ist eine prozesssichere und maßgenaue Fertigung der Bauteile möglich. Auch lassen sich dadurch die Bauteile sehr kostengünstig und in einfacher Weise in unterschiedlichen Längen herstellen.

Dabei sollten die Bauteile bevorzugt schalenförmig ausgebildet sein. Dadurch ist ein gewichtsmäßig leichter Träger realisierbar, welcher aufgrund seiner Form zugleich auch von Hause aus eine höhere Formsteifigkeit aufweist.

Bevorzugt sollten die Bauteile aus einem Leichtbauwerkstoff, wie beispielsweise einem Aluminiummetall hergestellt sein. Dadurch ist eine weitere Gewichtsersparnis durch die Art des Werkstoffes erreicht. Derartige Werkstoffe lassen sich besonders gut im Rollform- bzw. Strangpressverfahren herstellen.

Es bietet sich an, dass die Bauteile von gleichem oder unterschiedlichem Metall, insbesondere Nichteisen/Eisenmetall hergestellt sind. Dadurch ist es möglich, die Steifigkeits- bzw. Deformationseigenschaften des Trägers im Detail auf die jeweiligen Funktionsanforderungen einzustellen.

Ausführungsbeispiele

Weitere Vorteile und Anwendungsmöglichkeiten der vorliegenden Erfindung ergeben sich aus der nachfolgenden Beschreibung mehrerer Ausführungsbeispiele anhand der Zeichnungen.

Es zeigen:
- Figur 1: eine mögliche Ausführungsform eines erfindungsgemäßen Trägers, angeordnet an einer Fahrzeugkarosserie in Explosionsdarstellung,
- Figur 2: der Träger gemäß Figur 1 in perspektivischer Darstellung,
- Figur 3: der Träger gemäß Figur 1 in Explosionsdarstellung,
- Figur 4: der Träger gemäß Figur 1 in Querschnittsdarstellung entlang der Schnittlinie A-A gemäß Figur 2,
- Figur 5: der Träger gemäß Figur 1 in Querschnittsdarstellung entlang der Schnittlinie B-B gemäß Figur 2,
- Figur 6: eine andere Ausführungsform des erfindungsgemäßen Trägers in Querschnittsdarstellung,
- Figur 7: eine wiederum andere Ausführungsform des erfindungsgemäßen Trägers in Querschnittsdarstellung,
- Figur 8: eine nochmals andere Ausführungsform des erfindungsgemäßen Trägers mit drei Bauteilen in Querschnittsdarstellung,
- Figur 9: das Bauteil des Trägers gemäß Figur 1 mit Aussteifungselementen in perspektivischer Ansicht,
- Figur 10: eine weitere Ausführungsform des erfindungsgemäßen Trägers mit Aussteifungselementen in Querschnittsdarstellung und
- Figur 11: eine andere Ausführungsform des Bauteils des erfindungsgemäßen Trägers mit Aussteifungselementen in perspektivischer Ansicht.

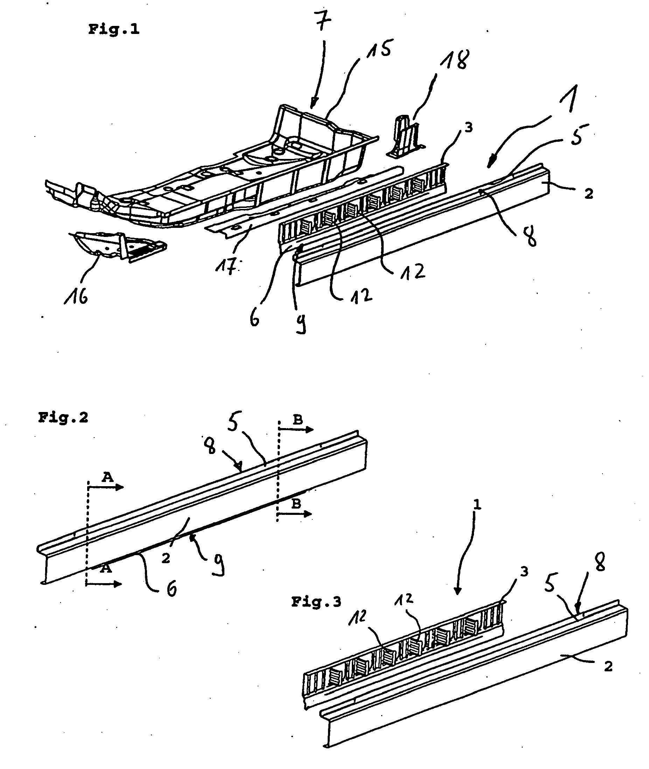

Figuren 1 bis 5 zeigen ein mögliches Ausführungsbeispiel eines erfindungsgemäßen Trägers 1 in verschiedenen Ansichten. Der Träger 1 kann als Längs- bzw. Querträger in einem Kraftfahrzeug eingesetzt werden und ist an die Karosserie 7 des Fahrzeuges fixierbar. Insbesondere kann der Träger 1 in Form eines Schwellers ausgebildet sein, welcher seitlich am Bodenblech 15 über Verbindungsstücke 16, 17, 18 befestigt werden kann.

Der Träger 1 weist wenigstens zwei Bauteile 2, 3 auf, welche unter Bildung eines Hohlraums 4 miteinander verbunden sind. Der Träger 1 weist ferner wenigstens zwei Verbindungsbereiche 5, 6 auf, mittels denen er an der Karosserie 7 des Fahrzeuges, vorzugsweise am Hauptboden der Karosserie 7, fixierbar ist.

Bei dem Träger 1 ist es vorgesehen, dass die Verbindungsbereiche 5, 6 an vom Hohlraum 4 abstehenden Abschnitten 8, 9 des Trägers 1 angeordnet sind. Dadurch ist eine einfache Montage des Trägers 1 an die Verbindungsstücke 16, 17, 18 zum Bodenblech 15 der Karosserie bzw. des Hauptbodens der Karosserie möglich. Ferner kann mittels der vom Hohlraum 4 abstehenden Abschnitte 8, 9 im Crash-Fall eine weitergehende Abdämpfung der auf das Bodenblech 15 drückenden Aufprallenergie erreicht werden. Dabei ist an jedem der Bauteile 2, 3 einer der Verbindungsbereiche 5, 6 vorgesehen.

Die Abschnitte 8, 9 erstrecken sich in Längsrichtung des Hohlraums 4 über dessen gesamte Länge. Die Abschnitte 8, 9 werden dabei durch Enden der Bauteile 2, 3 gebildet. Wie insbesondere in einer Zusammenschau der Figuren 2, 4 und 5 ersichtlich ist, ist wenigstens einer der Abschnitte 8, 9, nämlich der Abschnitt 9, zum Fixieren an einer sich entlang seines Verbindungsbereiches 6 ändernden Kontur der Karosserie 7 ausgebildet. Bei dem vorliegenden Ausführungsbeispiel ändert sich beispielsweise die Kontur 7 der Karosserie dahingehend, dass der Abschnitt 9 in Längsrichtung des Trägers 1 einen Versatz aufweist und insofern einen sich in Längsrichtung des Trägers 1 ändernden Querschnitt hat. Das andere Bauteil 3 dagegen kann einen im Wesentlichen gleich bleibenden Querschnitt über seine Länge aufweisen, um dadurch eine einfache Herstellung mittels Strangpressen, Rollprofilieren oder dergleichen Umformverfahren zu ermöglichen. Voraussetzung dafür ist jedoch, dass wenigstens eines der Bauteile 2, 3 des Trägers 1 nur einen der Abschnitte 8, 9 bildet, ansonsten müssten beide Bauteile 2, 3 mit ihren Abschnitten 8, 9 an die sich ändernde Kontur der Karosserie 7 angepasst werden.

Bei dem Ausführungsbeispiel gemäß der Figuren 1 bis 5 ist jeweils lediglich ein Abschnitt 8 bzw. 9 auch nur von einem Bauteil 2 bzw. 3 gebildet.

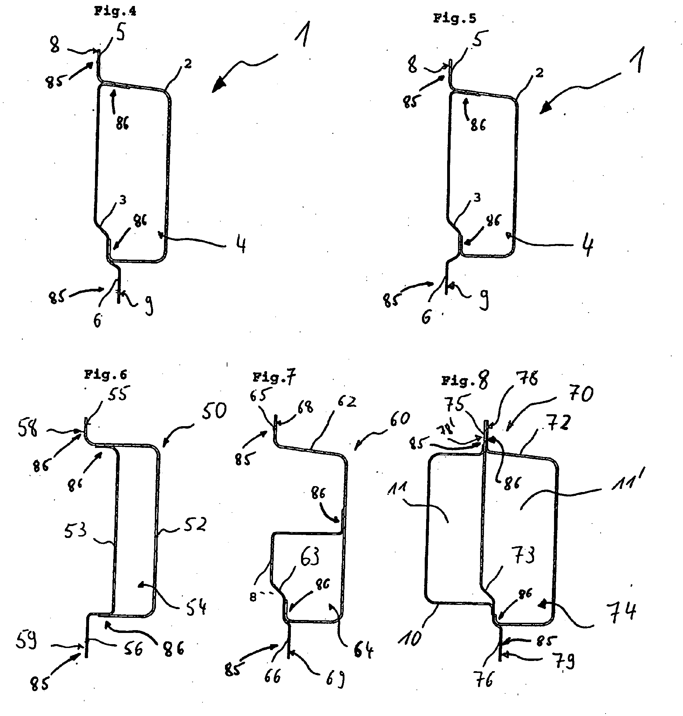

Selbstverständlich kann es nach einem anderen Ausführungsbeispiel auch vorgesehen sein, wie in Figur 8 ersichtlich ist, dass der Verbindungsbereich 75 durch einen Abschnitt 78 des einen Bauteils 72 und zusätzlich durch einen Abschnitt 78' des anderen Bauteils 73 gebildet ist. In diesem Fall ist jedoch der Verbindungsbereich 76 durch einen der Abschnitte, nämlich der Abschnitt 79, an lediglich einem Bauteil 73 vorgesehen, so dass der Abschnitt 79 zum Fixieren an einer sich in Längsrichtung des Trägers 70 ändernden Kontur der Karosserie ausgebildet werden kann, wie dies beispielsweise bei dem Ausführungsbeispiel gemäß der Figuren 1 bis 5 der Fall ist. Das Bauteil 72 der Ausführungsform in Figur 8 kann dabei wiederum mit im Wesentlichen gleich bleibendem Querschnitt über seine Länge ausgebildet sein.

Das Ausführungsbeispiel gemäß Figur 8 zeigt im Unterschied zu der Ausführungsform gemäß der Figuren 1 bis 5 neben den Bauteilen 72, 73 ein zusätzliches drittes Bauteil 10 auf, wobei die Bauteile 72, 73, 10 unter Bildung eines zwei Kammern 11, 11' einschließenden Hohlraums 74 zusammengefügt sind. Damit ist der in Figur 8 dargestellte Träger 70 von besonders großer Formsteifigkeit.

Figur 6 zeigt ein weiteres Ausführungsbeispiel eines Trägers 50 in Querschnittsdarstellung. Es sind dort zwei Bauteile 52, 53 vorgesehen, welche beide einen im Wesentlichen über die Länge gleich bleibenden Querschnitt aufweisen und durch Ineinanderstülpen der beiden Bauteile 52, 53 ein Hohlraum 54 gebildet ist. Der Träger 50 weist dabei Verbindungsbereiche 55, 56 auf, welche an vom Hohlraum 54 abstehenden Abschnitten 58, 59 des Trägers 50 angeordnet sind.

Figur 7 zeigt eine weitere Ausführungsform eines Trägers 60, mit zwei Bauteilen 62, 63, welche unter Bildung eines Hohlraums 64 miteinander verbunden und über wenigstens zwei Verbindungsbereiche 65, 66 an der (nicht dargestellten) Karosserie des Fahrzeuges fixiert sind. Auch bei dieser Ausführungsform sind die Verbindungsbereiche 65, 66 an vom Hohlraum 64 abstehenden Abschnitten 68, 69 des Trägers 60 angeordnet. Das Bauteil 63 ist mit seinem Abschnitt 69 zum Fixieren an einer sich in Längsrichtung des Trägers 60 ändernden Kontur der (nicht dargestellten) Karosserie des Fahrzeuges ausgebildet. Im Unterschied zu dem Querschnitt der Ausführungsform gemäß der Figuren 4 und 5 sind bei dem Träger 10 gemäß Figur 7 die beiden Bauteile 62, 63 in der Weise zusammengefügt, dass nur ein Teil des Bauteils 62 zum Bilden des Hohlraums 64 genutzt wird. Ein anderer Teil des Bauteils 62 in Art eines gewinkelten Schenkels ausgebildet, an dessen freiem Ende sich der Abschnitt 68 befindet.

Bei dem Ausführungsbeispiel gemäß der Figuren 1, 2 und 9 weist das Bauteil 3 Aussteifungselemente 12 auf, welche aus dem Bauteil 3 geformt sind. Die Aussteifungselemente 12 sind durch Trennen und anschließendes Umformen aus dem Bauteil 3 geformt. Zum Trennen kann beispielsweise ein Stanzverfahren und zum Umformen beispielsweise eine Biegeverfahren vorgesehen sein.

Die Aussteifungselemente 12 weisen im Wesentlichen quer zur Längsrichtung des Bauteils 3 und ragen dabei in den Hohlraum des Hohlraums 4 hinein. Durch das Anformen der Aussteifungselemente 12 aus dem Bauteil 3, läßt sich das Bauteil 3 zusammen mit den Aussteifungselementen 12 besonders einfach und kostengünstig herstellen. Denn das Bauteil 3 kann an einem Stück durch Rollen bzw. Strangpressen zuerst geformt und dann daraus in anschließenden Verfahrensschritten die Aussteifungselemente erzeugt werden. Auch ergibt sich dadurch eine Gewichtsersparnis, da keine zusätzlichen Bauteile an das Bauteil 3 angebracht werden müssen.

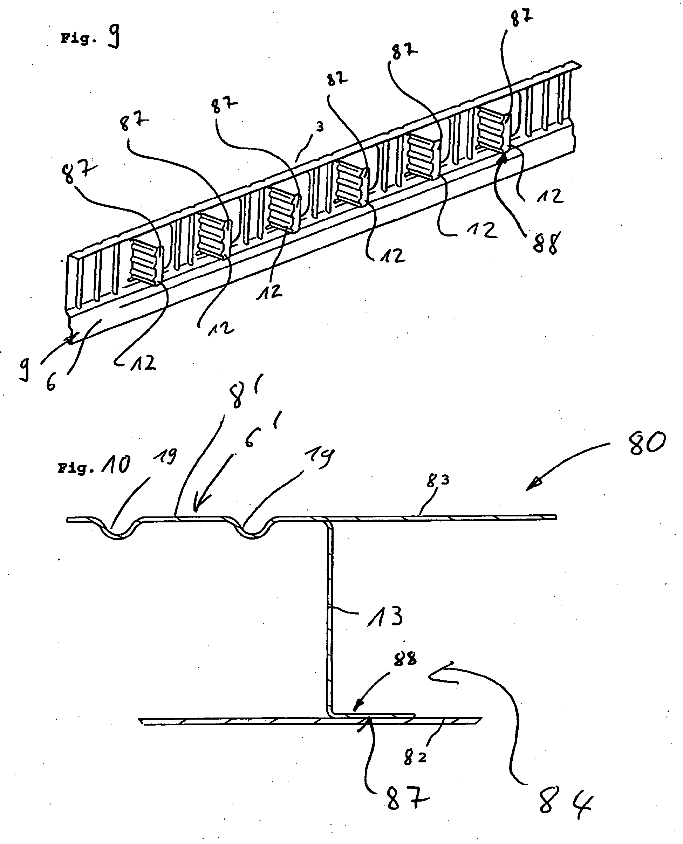

Bei dem in Figur 10 dargestellten Ausführungsbeispiel eines Trägers 80 ist das Bauteil 83 mit einem Aussteifungselement 13 in der Weise angeformt, dass es an seinem Ende angewinkelt ist, so dass das abgewinkelte Ende an einem zweiten Bauteil 32 eine Überlappungsfläche bildet. Das Aussteifungselement 13 kann damit an dem Bauteil 82, bspw. mittels thermischem Fügeverfahren problemlos fixiert werden.

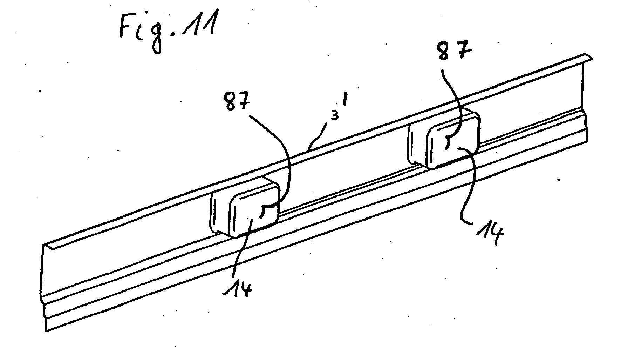

Figur 11 zeigt ein weiteres Ausführungsbeispiele eines Bauteils 3' mit topfförmigen Aussteifungselementen 14, welche in Längsrichtung des Bauteils 3' gesehen, hintereinander liegend angeordnet sind. Die Bauteile 14 sind dort durch Umformen, beispielsweise durch Gesenkformen, Ein-/Durchdrücken oder Tiefziehen aus dem Bauteil 3' geformt.

Bei den vorstehend beschriebenen Ausführungsformen des erfindungsgemäßen Trägers können die Bauteile in der Kombination von kaltgeformten Press- und Rollformteilen aufgebaut werden, sofern die Bauteile einen in Längsrichtung gesehen, gleich bleibenden Querschnitt aufweisen.

Wie insbesondere aus Figur 10 ersichtlich ist, kann der Verbindungsbereich 6' Ausnehmungen 19, beispielsweise in Form von Sicken, Einkerbungen oder Prägungen aufweisen. Dadurch können Materialdickensprünge des Abschnittes 8' kompensiert werden. Die Bauteile (2, 3; 52, 53; 62, 63; 72, 73; 82, 83)der vorstehend beschriebenen Ausführungsbeispiele können von gleichem oder unterschiedlichem Metall, wie beispielsweise Nichteisen/Eisenmetall, hergestellt sein. Die Bauteile (2, 3; 52, 53; 62, 63; 72, 73; 82, 83) können ferner unterschiedliche Bauteillängen aufweisen, wobei die Aussteifungselemente 12, 13, 14 über die gesamte Länge des jeweiligen Bauteils (3, 3', 83) verteilt angeordnet sein können.

### Bezugszeichenliste

- 1: Träger
- 2: Bauteil
- 3: Bauteil
- 4: Hohlraum
- 5: Verbindungsbereich
- 6, 6': Verbindungsbereich
- 7: Karosserie
- 8, 8': Abschnitt
- 9: Abschnitt
- 10: Bauteil
- 11, 11': Kammern
- 12: Aussteifungselement
- 13: Aussteifungselement
- 14: Aussteifungselement
- 15: Bodenblech
- 16: Verbindungsstück
- 17: Verbindungsstück
- 18: Verbindungsstück
- 19: Vertiefung
- 50: Träger
- 52: Bauteil
- 53: Bauteil
- 54: Hohlraum
- 55: Verbindungsbereich
- 56: Verbindungsbereich
- 58: Abschnitt
- 59: Abschnitt
- 60: Träger
- 62: Bauteil
- 63: Bauteil
- 64: Hohlraum
- 65: Verbindungsbereich
- 66: Verbindungsbereich
- 68: Abschnitt
- 69: Abschnitt
- 70: Träger
- 72: Bauteil
- 73: Bauteil
- 74: Hohlraum
- 75: Verbindungsbereich
- 76: Verbindungsbereich
- 78, 78': Abschnitt
- 79: Abschnitt
- 80: Träger
- 82: Bauteil
- 83: Bauteil
- 84: Hohlraum
- 85: Ende
- 86: Ende
- 87: Stützfläche
- 88: abgewinkeltes Ende

## Patentansprüche

1. Träger (1; 80) als Längs- bzw. Querträger in einem Kraftfahrzeug, insbesondere in Form eines Schwellers, mit wenigstens zwei Bauteilen (2, 3; 2, 3'; 82, 83), welche unter Bildung eines Hohlraums (4; 84) miteinander verbunden sind, **dadurch gekennzeichnet, dass** wenigstens eines der Bauteile (2, 3; 2, 3'; 82, 83) in den Hohlraum (4; 84) ragende Aussteifungselemente (12; 13; 14) mit jeweils einer Fläche (87) aufweist, welche zum Abstützen gegen das andere Bauteil (2; 2; 82) ausgebildet sind, wobei die Stützfläche (87) durch ein abgewinkeltes Ende (88) eines der Aussteifungselemente (12; 13) gebildet ist.

2. Träger nach Anspruch 1, **dadurch gekennzeichnet, dass** sich die Aussteifungselemente (12; 13) mit ihrer Stützfläche (87) gegen das andere Bauteil (2; 2; 82) abstützen.

3. Träger nach Anspruch 1 oder 2, **dadurch gekennzeichnet, dass** die Aussteifungselemente (12; 13) des wenigstens eines Bauteiles (3; 83), vorzugsweise mit ihrer Stützfläche (87), an dem anderen Bauteil (2; 82), vorzugsweise mittels thermischem Fügeverfahren, fixiert sind.

4. Träger nach einem der vorhergehenden Ansprüche, **dadurch gekennzeichnet, dass** die Aussteifungselemente (12; 13; 14) aus dem wenigstens einen Bauteil (3; 3'; 83) geformt sind.

5. Träger nach einem der vorhergehenden Ansprüche, **dadurch gekennzeichnet, dass** die Aussteifungselemente (14) durch Umformen, beispielsweise durch Gesenkformen, Ein-/Durchdrücken, Tiefziehen, aus dem wenigstens einen Bauteil (3') gebildet sind

6. Träger nach einem der Ansprüche 1 bis 4, **dadurch gekennzeichnet, dass** die Aussteifungselemente (12; 13) durch Trennen und anschließendes Umformen aus dem wenigstens einen Bauteil (3; 83) geformt sind.

7. Träger nach Anspruch 6, **dadurch gekennzeichnet, dass** die Aussteifungselemente (12; 13) durch Stanzen und anschließendes Biegen des ausgestanzten Abschnittes gebildet sind.

8. Träger nach einem der vorhergehenden Ansprüche, **dadurch gekennzeichnet, dass** die Aussteifungselemente (12; 13; 14) im wesentlichen quer zur Längsrichtung des wenigstens einen Bauteils (3; 3'; 83) liegen.

9. Träger nach einem der vorhergehenden Ansprüche, **dadurch gekennzeichnet, dass** die Aussteifungselemente an den wenigstens zwei Bauteilen vorgesehen sind.

10. Träger nach Anspruch 9, **dadurch gekennzeichnet, dass** die Aussteifungselemente derart in einem Abstand zueinander an den Bauteilen angeordnet sind, dass sich die Aussteifungselemente der Bauteile abwechseln.

11. Träger nach einem der vorhergehenden Ansprüche, **dadurch gekennzeichnet, dass** die wenigstens zwei Bauteile (2, 3; 52, 53; 62, 63; 72, 73) über wenigstens zwei Verbindungsbereiche (5, 6; 55, 56; 65, 66; 75, 76) an der Karosserie (7) des Fahrzeuges fixierbar sind und jedes der Bauteile (2, 3; 52, 53; 62, 63; 72, 73) wenigstens einen der Verbindungsbereiche (5, 6; 55, 56; 65, 66; 75, 76) bildet, wobei wenigstens eines der Bauteile (2, 3; 52, 53; 62, 63;72, 73) mit seinem einen Ende (85) einen der Verbindungsbereiche (5, 6; 55, 56; 65, 66; 75, 76) bildet und sich mit seinem anderen Ende (86) gegen das andere Bauteil (3, 2; 53, 52; 63, 62; 73) außerhalb dessen Verbindungsbereich (6, 5; 56, 55; 66, 65; 76) abstützt.

12. Träger nach Anspruch 11, **dadurch gekennzeichnet, dass** jedes der Bauteile (2, 3; 52, 53; 62, 63) mit seinem einen Ende (85) einen der Verbindungsbereiche (5, 6; 55, 56; 65, 66) bildet und sich mit seinem anderen Ende (86) gegen das jeweils andere der Bauteile (2, 3; 52, 53; 62, 63) außerhalb dessen Verbindungsbereich (6, 5; 56, 55; 66, 65) abstützt.

13. Träger nach Anspruch 11 oder 12, **dadurch gekennzeichnet, dass** die wenigstens zwei Bauteile (2, 3; 52, 53; 62, 63; 72, 73; 82, 83) einen im Wesentlichen gleich bleibenden Querschnitt über ihre Länge aufweisen.

14. Träger nach einem der Ansprüche 11 bis 13, **dadurch gekennzeichnet, dass** bei Bauteilen (52, 53) mit im Wesentlichen über die Länge gleich bleibendem Querschnitt die Bauteile (52, 53) Gleichteile sind.

15. Träger nach Anspruch 11 oder 12, **dadurch gekennzeichnet, dass** jedes der Bauteile (21, 3; 52, 53; 62, 63; 72, 73) wenigstens einen der Verbindungsbereiche (5, 6; 55, 56; 65, 66; 75, 76) bildet und wenigstens eines der Bauteile (2, 3; 52, 53; 62, 63; 72, 73) mit seinem wenigstens einen Verbindungsbereich (6; 56; 66; 76) zum Fixieren an einer sich in Längserstreckung des Trägers (1; 50; 60; 70) ändernden Kontur der Karosserie (7) ausgebildet ist.

16. Träger nach Anspruch 15, **dadurch gekennzeichnet, dass** das andere Bauteil (2; 52; 62; 72) einen im Wesentlichen gleich bleibenden Querschnitt über seine Länge aufweist und vorzugsweise ein Rollformteil ist.

17. Träger nach einem der Ansprüche 11 bis 16, **dadurch gekennzeichnet, dass** die Verbindungsbereiche (5, 6; 55, 56; 65, 66; 75, 76) an vom Hohlraum (4; 54; 64; 74) abstehenden Abschnitten (8, 9; 58, 59; 68, 69; 78, 79) des Trägers (1; 50; 60; 70) angeordnet sind.

18. Träger nach Anspruch 17, **dadurch gekennzeichnet, dass** sich die Abschnitte (8, 9; 58, 59; 68, 69; 78, 79) in Längsrichtung des Hohlraums (4; 54; 64; 74), vorzugsweise über dessen Länge, erstrecken.

19. Träger nach Anspruch 17 oder 18, **dadurch gekennzeichnet, dass** die Abschnitte (8, 9; 58, 59; 68, 69; 78, 79) durch Enden der Bauteile (2, 3; 52, 53; 62, 63; 72, 73) gebildet sind.

20. Träger nach einem der Ansprüche 11 bis 19, **dadurch gekennzeichnet, dass** drei Bauteile (72, 73, 10) vorgesehen sind, welche unter Bildung eines zwei Kammern (11, 11') einschließenden Hohlraums (74) zusammengefügt sind.

21. Träger nach einem der vorhergehenden Ansprüche, **dadurch gekennzeichnet, dass** die Bauteile (2, 3; 52, 53; 62, 63; 72, 73; 82, 83) schalenförmig ausgebildet sind und vorzugsweise die Bauteile (2; 52, 53; 62; 72) mit über die Länge gleich bleibendem Querschnitt mittels Rollformen und/oder Strangpressen hergestellt sind.

22. Träger nach einem der vorhergehenden Ansprüche, **dadurch gekennzeichnet, dass** die Bauteile (2, 3; 52, 53; 62, 63; 72, 73; 82, 83) aus einem Leichtbauwerkstoff, wie beispielsweise einem Aluminiummetall, einem Magnesiummetall oder einem ultrahochfesten Stahl, hergestellt sind.

23. Träger nach einem der vorhergehenden Ansprüche, **dadurch gekennzeichnet, dass** die Bauteile (2, 3; 52, 53; 62, 63; 72, 73; 82, 83) von gleichem oder unterschiedlichem Metall, insbesondere Nichteisen/Eisenmetall, hergestellt sind.

24. Träger als Längs- bzw. Querträger in einem Kraftfahrzeug, insbesondere in Form eines Schwellers, mit wenigstens zwei Bauteilen (2, 3'), welche unter Bildung eines Hohlraumes (84) miteinander verbunden sind, **dadurch gekennzeichnet, dass** wenigstens eines der Bauteile (2, 3') in den Hohlraum (4; 83) ragende Aussteifungselemente (14) mit jeweils einer Fläche (87) aufweist, welche zum Abstützen gegen das andere Bauteil (2) ausgebildet ist, wobei die Aussteifungselemente (14) topfförmig ausgebildet sind.

25. Kraftfahrzeug mit wenigstens einem Träger (1; 50; 60; 70; 80) nach einem der vorhergehenden Ansprüche.

## Claims

1. Beam (1; 80) as a longitudinal or transverse beam in a motor vehicle, particularly in the form of a sill, with at least two components (2, 3; 2, 3'; 82, 83) which are connected together with formation of a cavity (4; 84), **characterised in that** at least one of the components (2, 3; 2, 3'; 82, 83) comprises stiffening elements (12; 13; 14), which protrude into the cavity (4; 84), each with a respective surface (87) constructed for supporting relative to the other component (2; 2; 82), wherein the support surface (87) is formed by an angled end (88) of one of the stiffening elements (12; 13).

2. Beam according to claim 1, **characterised in that** the stiffening elements (12; 13) are supported by the support surface (87) thereof against the other component (2; 2; 82).

3. Beam according to claim 1 or 2, **characterised in that** the stiffening elements (12; 13) of the at least one component (3; 83) are fixed, preferably by the support surface (87) thereof, to the other component (2; 82), preferably by means of a thermal joining method.

4. Beam according to any one of the preceding claims, **characterised in that** the stiffening elements (12; 13; 14) are formed from the at least one component (3; 3'; 83).

5. Beam according to any one of the preceding claims, **characterised in that** the stiffening elements (14) are formed by reshaping, for example by impression die forging, indentation forming, extruding or deep-drawing, the at least one component (3').

6. Beam according to any one of claims 1 to 4, **characterised in that** the stiffening elements (12; 13) are formed by separating and subsequent reshaping of the at least one component (3; 83).

7. Beam according to claim 6, **characterised in that** the stiffening elements (12; 13) are formed by punching and subsequent bending of the punched-out section.

8. Beam according to any one of the preceding claims, **characterised in that** the stiffening elements (12; 13; 14) lie substantially transversely to the longitudinal direction of the at least one component (3; 3'; 83).

9. Beam according to any one of the preceding claims, **characterised in that** the stiffening elements are provided at the at least two components.

10. Beam according to claim 9, **characterised in that** the stiffening elements are so arranged at a spacing from one another at the components that the stiffening elements of the components alternate with one another.

11. Beam according to any one of the preceding claims, **characterised in that** the at least two components (2, 3; 52, 53; 62, 63; 72, 73) are fixable to the bodywork (7) of the vehicle by way of at least two connecting regions (5, 6; 55, 56; 65, 66; 75, 76) and each of the components (2, 3; 52, 53; 62, 63; 72, 73) forms at least one of the connecting regions (5, 6; 55, 56; 65, 66; 75, 76), wherein at least one of the components (2, 3; 52, 53; 62, 63; 72, 73) forms one of the connecting regions (5, 6; 55, 56; 65, 66; 75, 76) by one end (85) thereof and is supported by the other end (86) thereof against the other component (3, 2; 53, 52; 63, 62; 73) outside the connecting region (6, 5; 56, 55; 66, 65; 76) thereof.

12. Beam according to claim 11, **characterised in that** each of the components (2, 3; 52, 53; 62, 63) forms one of the connection regions (5, 6; 55, 56; 65, 66) by one end (85) thereof and is supported by the other end (86) thereof against the respective other component (2, 3; 52, 53; 62, 63) thereof outside the connection region (6, 5; 56, 55; 66, 65).

13. Beam according to claim 11 or 12, **characterised in that** the at least two components (2, 3; 52, 53; 62, 63; 72, 73; 82, 83) have a substantially constant cross-section over the length thereof.

14. Beam according to any one of claims 11 to 13, **characterised in that** in the case of components (52, 53) with a substantially constant cross-section over the length the components (52, 53) are identical parts.

15. Beam according to claim 11 or 12, **characterised in that** each of the components (2, 3; 52, 53; 62, 63; 72, 73) forms at least one of the connecting regions (5, 6; 55, 56; 65, 66; 75, 76) and at least one of the components (2, 3; 52, 53; 62, 63; 72, 73) is constructed by its at least one connecting region (6; 56; 66; 76) for fixing to a profile, which changes in longitudinal direction of the beam (1; 50; 60; 70) of the bodywork (7).

16. Beam according to claim 15, **characterised in that** the other component (2; 52; 62; 72) has a substantially constant cross-section over its length and is preferably a roll-shaped part.

17. Beam according to any one of claims 11 to 16, **characterised in that** the connecting regions (5, 6; 55, 56; 65, 66; 75, 76) are arranged at sections (8, 9; 58, 59; 68, 69; 78, 79), which protrude from the cavity (4; 54; 64; 74), of the beam (1; 50; 60; 70).

18. Beam according to claim 17, **characterised in that** the sections (8, 9; 58, 59; 68, 69; 78, 79) extend in the longitudinal direction of the cavity (4; 54; 64; 74), preferably over the length thereof.

19. Beam according to claim 17 or 18, **characterised in that** the sections (8, 9; 58, 59; 68, 69; 78, 79) are formed by ends of the components (2, 3; 52, 53; 62, 63; 72, 73).

20. Beam according to any one of claims 11 to 19, **characterised in that** three components (72, 73, 10) are provided which are joined together with formation of a cavity (74) enclosing two chambers (11, 11').

21. Beam according to any one of the preceding claims, **characterised in that** components (2, 3; 52, 53; 62, 63; 72, 73; 82, 83) are of shell-shaped construction and preferably the components (2; 52, 53; 62; 72) are formed by means of roll-shaping and/or extruding with a cross-section constant over the length.

22. Beam according to any one of the preceding claims, **characterised in that** the components (2, 3; 52, 53; 62, 63; 72, 73; 82, 83) are made from a light constructional material such as, for example, an aluminium metal, a magnesium metal or an ultra-high-strength steel.

23. Beam according to any one of the preceding claims, **characterised in that** the components (2, 3; 52, 53; 62, 63; 72, 73; 82, 83) are made from the same metal or different metals, particularly non-ferrous metal / ferrous metal.

24. Beam as longitudinal beam or transverse beam in a motor vehicle, particularly in the form of a sill, with at least two components (2, 3') which are connected together with formation of a cavity (84), **characterised in that** at least one of the components (2, 3') comprises stiffening elements (14), which protrude into the cavity (4; 83), each with a respective surface (87) constructed for supporting relative to the other component (2), wherein the stiffening elements (14) are of pot-shaped construction.

25. Motor vehicle with at least one beam (1; 50; 60; 70; 80) according to any one of the preceding claims.

## Revendications

1. Poutre (1 ; 80) en tant que longeron ou traverse dans un véhicule automobile, en particulier sous la forme d'un seuil de porte, avec au moins deux pièces (2, 3 ; 2, 3' ; 82, 83), qui sont assemblées l'une à l'autre en formant un espace creux (4 ; 84), **caractérisée en ce qu'**au moins une des pièces (2, 3 ; 2, 3' ; 82, 83) présente des éléments de renforcement (12 ; 13 ; 14) pénétrant dans l'espace creux (4 ; 84) et comprenant chacun une face (87) qui est réalisée de façon à s'appuyer contre l'autre pièce (2 ; 2 ; 82), dans laquelle la face d'appui (87) est formée par une extrémité coudée (88) d'un des éléments de renforcement (12 ; 13).

2. Poutre selon la revendication 1, **caractérisée en ce que** les éléments de renforcement (12 ; 13) s'appuient par leur face d'appui (87) contre l'autre pièce (2 ; 2 ; 82).

3. Poutre selon la revendication 1 ou 2, **caractérisée en ce que** les éléments de renforcement (12 ; 13) de ladite au moins une pièce (3 ; 83) sont fixés, de préférence par leur face d'appui (87), sur l'autre pièce (2 ; 82), de préférence au moyen d'un procédé d'assemblage thermique.

4. Poutre selon l'une quelconque des revendications précédentes, **caractérisée en ce que** les éléments de renforcement (12 ; 13 ; 14) sont formés à partir de ladite au moins une pièce (3 ; 3' ; 83).

5. Poutre selon l'une quelconque des revendications précédentes, **caractérisée en ce que** les éléments de renforcement (14) sont formés par déformation, par exemple par forgeage, enfoncement/refoulement, emboutissage, à partir de ladite au moins une pièce (3').

6. Poutre selon l'une quelconque des revendications 1 à 4, **caractérisée en ce que** les éléments de renforcement (12 ; 13) sont formés par découpage et ensuite déformation à partir de ladite au moins une pièce (3 ; 83).

7. Poutre selon la revendication 6, **caractérisée en ce que** les éléments de renforcement (12 ; 13) sont formés par estampage et ensuite pliage de la partie estampée.

8. Poutre selon l'une quelconque des revendications précédentes, **caractérisée en ce que** les éléments de renforcement (12 ; 13 ; 14) sont situés pour l'essentiel transversalement à la direction longitudinale de ladite au moins une pièce (3 ; 3' ; 83).

9. Poutre selon l'une quelconque des revendications précédentes, **caractérisée en ce que** les éléments de renforcement sont prévus sur lesdites au moins deux pièces.

10. Poutre selon la revendication 9, **caractérisée en ce que** les éléments de renforcement sont disposés sur les pièces à une distance l'un de l'autre telle que les éléments de renforcement des deux pièces alternent.

11. Poutre selon l'une quelconque des revendications précédentes, **caractérisée en ce que** les au moins deux pièces (2, 3 ; 52, 53 ; 62, 63 ; 72, 73) peuvent être fixées à la carrosserie (7) du véhicule par au moins deux zones de liaison (5, 6 ; 55, 56 ; 65, 66 ; 75, 76) et chacune des pièces (2, 3 ; 52, 53 ; 62, 63 ; 72, 73) forme au moins une des zones de liaison (5, 6 ; 55, 56 ; 65, 66 ; 75, 76), dans laquelle au moins une des pièces (2, 3 ; 52, 53 ; 62, 63 ; 72, 73) forme avec sa première extrémité (85) une des zones de liaison (5, 6 ; 55, 56 ; 65, 66 ; 75, 76) et s'appuie par son autre extrémité (86) contre l'autre pièce (3, 2 ; 53, 52 ; 63, 62 ; 73) à l'extérieur de sa zone de liaison (6, 5 ; 56, 55 ; 66, 65 ; 76).

12. Poutre selon la revendication 11, **caractérisée en ce que** chacune des pièces (2, 3 ; 52, 53 ; 62, 63) forme avec sa première extrémité (85) une des zones de liaison (5, 6 ; 55, 56 ; 65, 66) et s'appuie par son autre extrémité (86) contre l'autre des pièces (2, 3 ; 52, 53 ; 62, 63) à l'extérieur de sa zone de liaison (6, 5 ; 56, 55 ; 66, 65).

13. Poutre selon la revendication 11 ou 12, **caractérisée en ce que** lesdites au moins deux pièces (2, 3 ; 52, 53 ; 62, 63 ; 72, 73 ; 82, 83) présentent une section transversale restant sensiblement constante sur leur longueur.

14. Poutre selon l'une quelconque des revendications 11 à 13, **caractérisée en ce que** les pièces (52, 53) sont des pièces identiques dans le cas de pièces (52, 53) présentant une section transversale restant sensiblement constante sur leur longueur.

15. Poutre selon la revendication 11 ou 12, **caractérisée en ce que** chacune des pièces (2, 3 ; 52, 53 ; 62, 63 ; 72, 73) forme au moins une des zones de liaison (5, 6 ; 55, 56 ; 65, 66 ; 75, 76) et au moins une des pièces (2, 3 ; 52, 53 ; 62, 63 ; 72, 73) est réalisée avec son au moins une zone de liaison (6 ; 56 ; 66 ; 76) d'être fixée à un contour de la carrosserie (7) qui change dans la direction longitudinale de la poutre (1 ; 50 ; 60 ; 70).

16. Poutre selon la revendication 15, **caractérisée en ce que** l'autre pièce (2 ; 52 ; 62 ; 72) présente une section transversale restant sensiblement constante sur sa longueur et est de préférence une pièce formée par roulage.

17. Poutre selon l'une quelconque des revendications 11 à 16, **caractérisée en ce que** les zones de liaison (5, 6 ; 55, 56 ; 65, 66 ; 75, 76) sont disposées sur des parties (8, 9 ; 58, 59 ; 68, 69 ; 78, 79) de la poutre (1 ; 50 ; 60 ; 70) saillantes à partir de l'espace creux (4 ; 54 ; 64 ; 74).

18. Poutre selon la revendication 17, **caractérisée en ce que** les parties (8, 9 ; 58, 59 ; 68, 69 ; 78, 79) s'étendent dans la direction longitudinale de l'espace creux (4 ; 54 ; 64 ; 74), de préférence sur la longueur de celui-ci.

19. Poutre selon la revendication 17 ou 18, **caractérisée en ce que** les parties (8, 9 ; 58, 59 ; 68, 69 ; 78, 79) sont formées par les extrémités des pièces (2, 3 ; 52, 53 ; 62, 63 ; 72, 73).

20. Poutre selon l'une quelconque des revendications 11 à 19, **caractérisée en ce qu'**il est prévu trois pièces (72, 73, 10), qui sont assemblées en formant un espace creux (74) comprenant deux chambres (11, 11').

21. Poutre selon l'une quelconque des revendications précédentes, **caractérisée en ce que** les pièces (2, 3 ; 52, 53 ; 62, 63 ; 72, 73 ; 82, 83) sont réalisées en forme de coquilles et de préférence les pièces (2 ; 52, 53 ; 62 ; 72) sont fabriquées avec une section transversale restant constante sur leur longueur au moyen d'un procédé de roulage et/ou d'extrusion.

22. Poutre selon l'une quelconque des revendications précédentes, **caractérisée en ce que** les pièces (2, 3 ; 52, 53 ; 62, 63 ; 72, 73 ; 82, 83) sont fabriquées en un matériau de construction léger, comme par exemple un métal à base d'aluminium, un métal à base de magnésium ou un acier à très haute résistance.

23. Poutre selon l'une quelconque des revendications précédentes, **caractérisée en ce que** les pièces (2, 3 ; 52, 53 ; 62, 63 ; 72, 73 ; 82, 83) sont fabriquées en un métal identique ou différent, en particulier en métal non ferreux/métal ferreux.

24. Poutre en tant que longeron ou traverse dans un véhicule automobile, en particulier sous la forme d'un seuil de porte, avec au moins deux pièces (2, 3'), qui sont assemblées l'une à l'autre en formant un espace creux (84), **caractérisée en ce qu'**au moins une des pièces (2, 3') présente des éléments de renforcement (14) pénétrant dans l'espace creux (4 ; 83) et comprenant chacun une face (87) qui est réalisée de façon à s'appuyer contre l'autre pièce (2), dans laquelle les éléments de renforcement (14) sont réalisés en forme de godet.

25. Véhicule automobile comportant au moins une poutre (1 ; 50 ; 60 ; 70 ; 80) selon l'une quelconque des revendications précédentes.
